# EUROPÄISCHE PATENTSCHRIFT

(11) **EP 2 714 758 B1**
(45) Veröffentlichungstag und Bekanntmachung des Hinweises auf die Patenterteilung: **08.07.2015**
(21) Anmeldenummer: 12722372.5
(22) Anmeldetag: 21.05.2012
(51) Int. Cl.: C08G 18/12, C08G 18/10, C08G 18/18, C08G 18/36, C08G 18/48, C08G 101/00

(54) **HOCHELASTISCHE POLYURETHANSCHAUMSTOFFE, ENTHALTEND RICINUSÖL**
HIGHLY ELASTIC POLYURETHANE FOAMS CONTAINING CASTOR OIL
MOUSSES POLYURÉTHANE HAUTEMENT ÉLASTIQUES COMPRENANT DE L'HUILE DE RICIN

(30) Priorität: 26.05.2011 EP 11167691
(43) Veröffentlichungstag der Anmeldung: 09.04.2014
(73) Patentinhaber: BASF SE, 67056 Ludwigshafen (DE)
(72) Erfinder: MEYER, Andre, 49448 Brockum (DE); LUTTER, Heinz-Dieter, 49459 Lembruch (DE); LESEBERG, Christoph, 49448 Brockum (DE); JOHANN-KRONE, Annika, 32351 Stemwede-Dielingen (DE)
(86) Internationale Anmeldenummer: PCT/EP2012/059366
(87) Internationale Veröffentlichungsnummer: WO 2012/160024

(56) Entgegenhaltungen:
- DE-A1-102008 030 940
- US-A1- 2009 286 897
- US-A1- 2010 227 938

## Beschreibung

Die vorliegende Erfindung betrifft ein Verfahren zur Herstellung von hochelastischen Polyurethanweichschaumstoffen, bei dem man (a) Isocyanatprepolymer, (b) Polymere Verbindungen mit gegenüber Isocyanaten reaktiven Gruppen, (c) Ricinusöl, (d) gegebenenfalls Kettenverlängerungs- und/oder Vernetzungsmittel, (e) Katalysatoren, (f) Treibmittel sowie gegebenenfalls (g) Zusatzstoffen, zu einer Reaktionsmischung vermischt und zum Polyurethanweichschaumstoff umsetzt, wobei mehr als 5 Gew.-% Ricinusöl (c), bezogen auf das Gesamtgewicht der Komponenten (b) bis (g) eingesetzt werden und das Isocyanatprepolymer (a) erhalten wird durch Vermischen von Diphenylmethandiisocyanat (a1) und Polyol 1 (a2) sowie gegebenenfalls weiteren Polyolen, Kettenverlängerern und/oder Vernetzungsmitteln, wobei als Polyol 1 (a2) ein Polyalkylenoxidpolyol mit einer Hydroxylzahl von 30 bis 60, einer mittleren Funktionalität von 2,3 bis 3,2 und einem Propylenoxidanteil, bezogen auf den Gehalt an Alkylenoxid, von 70 bis 100 Gew.-% eingesetzt wird. Weiter betrifft die vorliegende Erfindung hochelastische Polyurethanschaumstoffe die durch ein solches Verfahren erhältlich sind und die Verwendung dieser Schaumstoffe als Autositze.

Hochelastische Polyurethanschaumstoffe sind bekannt und werden beispielsweise als Polstermaterialien in der Möbelindustrie, als Matratzen oder bei der Herstellung von Autositzen eingesetzt. Aus ökologischen Gründen und vor dem Hintergrund schwindender Reserven an fossilen Rohstoffen werden in vielen Bereichen Lösungen gesucht, die es erlauben die fossilen Rohstoffe durch nachwachsende Rohstoffe zu ersetzen. So werden bei der Herstellung von Polyurethanintegralschaumstoffen Polyole auf Basis fossiler Rohstoffe durch Polyole auf Basis von nachwachsenden Rohstoffen ersetzt.

JP 2010174111 beschreibt ein Verfahren zur Herstellung von Polyurethanschaumstoffen, bei dem 45-75 Gew-% Ricinusöl in der Basispolyolkomponente in Gegenwart von Polysterpolyol und TDI (80:20 2,4-TDI-2,6-TDI Mischungen) als Isocyanat-Komponente eingesetzt werden. Dieses Verfahren führt zu Schaumstoffen mit einer geringen Elastizität.

US 2009286897 beschreibt einen viskoelastischen Polyurethanschaumstoff mit einer Rückprallelastizität nach DIN EN ISO 8307von 14 %, der ausgehend von einem Isocyanatprepolymer ausgehend von monomerem und höherkernigem MDI sowie einem Polyetherol mit einer Funktionalität von 3, einer OH-Zahl von 30 und einem Ethylenoxidgehalt von 15 Gew.-% erhalten wird.

Weiter beschreibt DE102008030940 einen weichen, geschlossenzelligen PU-Schaum, enthaltend OH-gruppenhaltiges Öl, vorzugsweise Ricinusöl, welches in den PU eingebaut wird. Der Schaum ist schrumpffrei, doch überwiegend geschlossenzellig und weist damit einen nur geringen Komfort auf, da Feuchtigkeit nicht abtransportiert werden kann.

Nachteilig an der Verwendung von Ricinusöl bei der Herstellung von hochelastischen Polyurethanschaumstoffen ist die geringe Kettenlänge und hohe Funktionalität. Dies führt tendenziell zu einer Härtezunahme der daraus hergestellten Schaumstoffe. Um dies zu vermeiden schlägt JP 2006104404 vor, ein ethoxyliertes Ricinusöl zur Herstellung von Polyurethanschaumstoffen einzusetzen. Dies erfordert allerdings einen zusätzlichen Schritt und damit zu einem komplexen und teuren Herstellungsverfahren.

Ein weiterer Ansatz, die Härte der erhaltenen Schaumstoffe zu verringern und gleichzeitig einen hohen Anteil an biobasierter isocyanatreaktiver Komponente einzusetzen wird in WO 2009032894 beschrieben. Dazu werden isocyanatreaktive Naturstoffe mit einer Funktionalität von weniger als 1,5 eingesetzt. Dies führt aber zu einer Absenkung der Vernetzungsdichte und damit zu einer Verschlechterung wichtiger physikalischer Eigenschaften des Schaumstoffes, wie Zug- und Reißfestigkeit.

Aufgabe der vorliegenden Erfindung war es einen hochelastischen Polyurethanweichschaumstoff mit geringer Stauchhärte zu liefern, wobei ein Teil der gegenüber Isocyanat reaktive Komponente auf nachwachsenden Rohstoffen basiert und der einfach und leicht verarbeitet werden kann.

Die erfindungsgemäße Aufgabe wird gelöst durch einen hochelastischen Polyurethanschaumstoff, der erhalten wird indem man (a) Isocyanatprepolymer, (b) Polymere Verbindungen mit gegenüber Isocyanaten reaktiven Gruppen, (c) Ricinusöl, (d) gegebenenfalls Kettenverlängerungs- und/oder Vernetzungsmittel, (e) Katalysatoren, (f) Treibmittel sowie gegebenenfalls (g) Zusatzstoffen, zu einer Reaktionsmischung vermischt und zum Polyurethanweichschaumstoff umsetzt, wobei mehr als 5 Gew.-% Ricinusöl (c), bezogen auf das Gesamtgewicht der Komponenten (b) bis (g) eingesetzt werden und das Isocyanatprepolymer (a) erhalten wird durch Vermischen von Diphenylmethandiisocyanat (a1) und Polyol 1 (a2) sowie gegebenenfalls weiteren Polyolen, Kettenverlängerern und/oder Vernetzungsmitteln, wobei als Polyol 1 (a2) ein Polyalkylenoxidpolyol mit einer Hydroxylzahl von 30 bis 60, einer mittleren Funktionalität von 2,3 bis 3,2 und einem Propylenoxidanteil, bezogen auf den Gehalt an Alkylenoxid, von 70 bis 100 Gew.-% eingesetzt wird.

Als hochelastischer Polyurethanschaumstoff wird dabei ein Polyurethanschaumstoff mit einer Dichte von kleiner als 100 g/l, vorzugsweise 20 bis 70 g/l, besonders bevorzugt 30 bis 60 g/l und insbesondere 40 bis 55 g/l und einer Rückprallelastizität nach DIN EN ISO 8307 von größer als 40%, vorzugsweise größer als 45 und besonders bevorzugt größer als 50 % bezeichnet. Weiter weisen hochelastische Polyurethanschaumstoffe gemäß der vorliegenden Erfindung vorzugsweise eine Stauchhärte nach DIN EN ISO 2439 bei 40 % Verformung von weniger als 10 kPa, besonders bevorzugt weniger als 8 kPa und insbesondere weniger als 6 kPa auf und einen Druckverformungsrest, gemessen bei 70°C, 50% Stauchung über 22 Stunden nach DIN EN ISO 1856, von vorzugsweise kleiner 30 %, besonders bevorzugt kleiner 20 % und insbesondere kleiner 15 % auf.

Zur Herstellung des erfindungsgemäßen Isocyanatprepolymers (a) werden Diphenylmethandiisocyanat (a1) und Polyol 1 (a2) sowie gegebenenfalls weiteren Polyolen und/oder Kettenverlängerern vermischt.

Als Diphenylmethandiisocyanat (a1) kann monomeres Diphenyldiisocyanat, ausgewählt aus der Gruppe, bestehend aus 2,2'-Diphenylmethandiisocyanat, 2,4'-Diphenylmethandiisocyanat oder 4,4'-Diphenylmethandiisocyanat oder Mischungen von zwei oder allen drei Isomeren sowie Mischungen eines oder mehrerer monomerer Diphenylmethandiisocyanaten mit höherkernigen homologen des Diphenylmethandiisocyanats eingesetzt werden. Vorzugsweise ist die Viskosität des Diphenylmethandiisocyanats (a1) bei 20 °C kleiner als 200 mPas, besonders bevorzugt kleiner als 150 mPas und besonders bevorzugt kleiner als 100 mPas.

Bevorzugt enthält das Diphenylmethandiisocyanat (a1) 50 bis 80 Gew.-%, besonders bevorzugt 60 bis 75 Gew.-% monomerem Diphenylmethandiisocyanat und 20 bis 50 Gew.-%, besonders bevorzugt 25 bis 40 Gew.-% höherkernigen Homologen des Diphenylmethandiisocyanat, jeweils bezogen auf das Gesamtgewicht des Diphenylmethandiisocyanats (a1), auf. Dabei weist das monomere Diphenylmethandiisocyanat vorzugsweise einen Anteil von 70 bis 85 Gew.-% des 4,4'-Isomeren des Diphenylmethandiisocyanats und 15 bis 30 Gew.-% des 2,4'-Isomeren des Diphenylmethandiisocyanats, jeweils bezogen auf das Gesamtgewicht des monomeren Diphenylmethandiisocyanats, auf.

Als Polyol 1 (a2) wird ein Polyalkylenoxidpolyol mit einer Hydroxylzahl von 30 bis 60, vorzugsweise 40 bis 50 mg KOH/g, einer mittleren Funktionalität von 2,3 bis 3,2, vorzugsweise 2,5 bis 3,0 und insbesondere 2,6 bis 2,8 und einem Propylenoxidanteil, bezogen auf den Gehalt an Alkylenoxid, von 90 bis 100 %, vorzugsweise 95 bis 100 % und insbesondere 100 Gew.-% eingesetzt. Sind im Polymer 1 neben Propylenoxid weitere Alkylenoxide enthalten, handelt es sich dabei vorzugsweise um Ethylenoxid. Als Startermoleküle können alle bekannten und unter (b) beschriebnen Starter eingesetzt werden wird. Vorzugsweise werden als Starter trifunktionelle Starter, wie Glycerin oder Trimethylolpropan, eingesetzt. Die allgemeine Herstellung der Polyole 1 (a1) entspricht der unter (b) beschriebenen Herstellung der Polyetherole.

Neben den genannten Polyolen 1 (a1) können gegebenenfalls weiteren Polyole, Kettenverlängerer und/oder Vernetzungsmittel zur Herstellung der Isocyanatprepolymere (a) eingesetzt werden. Solche Polyole, Kettenverlängerer und/oder Vernetzungsmittel sind unter (b) und (c) beschrieben. Vorzugsweise werden zur Herstellung der Isocyanatprepolymere (a) keine Kettenverlängerungsmittel und/oder Vernetzungsmittel eingesetzt.

Neben dem Polyol 1 (a1) wird vorzugsweise zur Herstellung des Isocyanatprepolymers (a) noch ein Polyol 2 eingesetzt. Dabei handelt es sich bei Polyol 2 vorzugsweise um ein Polyalkylenoxidpolyol mit einer Hydroxylzahl von 30 bis 60, vorzugsweise 40 bis 60, einer mittleren Funktionalität von 2,3 bis 3,2 vorzugsweise 2,5 bis 3,0 und insbesondere 2,6 bis 2,8 und einem Ethylenoxidanteil, bezogen auf den Gehalt an Alkylenoxid, von 70 bis 90 Gew.-%, bezogen auf den Gehalt an Alkylenoxid. Vorzugsweise handelt es sich bei dem Alkylenoxid um eine Mischung aus Ethylenoxid und Propylenoxid. Als Startermoleküle können alle bekannten und unter (b) beschriebnen Starter eingesetzt werden. Vorzugsweise werden als Starter trifunktionelle Starter, wie Glycerin oder Trimethylolpropan, eingesetzt. Die allgemeine Herstellung der Polyole 2 entspricht der unter (b) beschriebenen Herstellung der Polyetherole.

Zur Herstellung des Isocyanatprepolymers werden die Einsatzstoffe Diphenylmethandiisocyanat (a1), Polyol 1 (a2) und gegebenenfalls weitere Polyole, Kettenverlängerungsmittel und/oder Vernetzungsmittel vermischt. Vorzugsweise geschieht dies in einem Verhältnis, dass der NCO-Gehalt des Prepolymers 28 bis 33 Gew.-%, vorzugsweise 29 bis 31 Gew.-% beträgt. Dabei beträgt der Anteil des eingesetzten Diphenylmethandiisocyanats (a1) vorzugsweise 75 bis 99 Gew.-%, des Polyols 1 (a2) vorzugsweise 1 bis 10 Gew.-% und des Polyols 2 0 bis 15 Gew.-%, vorzugsweise 2 bis 15 und insbesondere 4 bis 12 Gew.-%. Bevorzugt wird die Mischung auf Temperaturen von 30 bis 100 °C, vorzugsweise etwa 80 °C erwärmt.

Als polymere Verbindungen mit gegenüber Isocyanat reaktiven Gruppen (b) kommen die zur Herstellung von Polyurethan-Weichschaumstoffen üblichen und bekannten Verbindungen zum Einsatz. Bevorzugt kommen Polyesteralkohole, und/oder Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht. Insbesondere werden Polyetheralkohole eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxiden spricht man auch von Polyalkylenoxidpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von hochelastischen Polyurethanweichschaumstoffen werden insbesondere zwei- und/oder dreifunktionelle Polyalkylenoxidpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Die Hydroxylzahl der Polyesteralkohole liegt vorzugsweise im Bereich zwischen 40 und 100 mg KOH/g.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Bei einem polymermodifizierten Polyol handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist.

Polymerpolyole sind beispielsweise in EP-A-250 351, DE 111 394, US 3 304 273, US 3 383 351, US 3 523 093, DE 1 152 536 und DE 1 152 537 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyol, bevorzugt Polyesterol oder Polyetherol, hergestellt. Die Seitenketten entstehen im Allgemeinen durch Übertragung der Radikale von wachsenden Polymerketten auf Polyole. Das Polymer-Polyol enthält neben den Propfcopolymerisaten überwiegend die Homopolymere der Olefine, dispergiert in unverändertem Polyol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol oder Polyetherol als kontinuierlicher Phase polymerisiert.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Vorzugsweise wird kein Polymerpolyol eingesetzt.

Besonders bevorzugt wird als Polyol b im Wesentlichen ausschließlich Polyetheralkohole mit einer Funktionalität von 2 bis 4, vorzugsweise 2,5 bis 3,5 und einem mittleren Equivalentmolekulargewicht von 400 bis 3000, vorzugsweise 1000 bis 2500 g/mol eingesetzt. Dabei bedeutet "im Wesentlichen", dass weniger als 30 Gew.-%, besonders bevorzugt weniger als 20, mehr bevorzugt weniger als 10 und insbesondere keine weiteren Polyole eingesetzt werden. Vorzugsweise handelt es sich bei den Polyetheralkoholen um solche, die durch Reaktion von Ethylenoxid und/oder Propylenoxid als Alkylenoiyde mit Startermolekülen erhalten werden, wobei vorzugsweise der Gehalt an Ethylenoxid 40 bis 5, besonders bevorzugt 30 bis 8 und insbesondere 20 bis 10 Gew.-%, bezogen auf das Gesamtgewicht an Ethylenoxid und Porpylenoxid, beträgt.

Ricinusöl (c) ist ein Pflanzenöl, das aus den Samen des tropischen Wunderbaums (Ricinus communis) gewonnen wird und trägt die CAS Nr. 08001-79-4. Dabei handelt es sich um ein im Wesentlichen aus triglyceriden von Fettsäuren bestehenden Gemisch, das ca. 70 Gew.-% Triglyceride der Ricinolsäure, ca. 27 Gew.-% Triglyceride von zwei Molekülen Ricinolsäure und einem Molekül einer weiteren Fettsäure und ca. 3 Gew.-% Triglyceride von einem Molekül Ricinolsäure und zwei Molekülen einer weiteren Fettsäureeiner Fettsäure enthält. Als weitere Fettsäuren sind beispielsweise Linolsäure, Ölsäure, Palmitinsäure und Stearinsäure enthalten. Die Angaben zur Zusammensetzung variieren in Abhängigkeit von der Herkunft. Dieses gegenüber Isocyanatgruppen reaktive natürliche Öl besitzt eine durchschnittliche Funktionalität von ca. 2,7 und eine OH-Zahl von 160-185 mg KOH/g.

Erfindungsgemäß wird Ricinusöl (c) in einer Menge von größer 5 Gew.-%, bevorzugt 10 bis 30 Gew.-%, besonders bevorzugt 12 bis 25 Gew.-% und insbesondere 15 bis 20 Gew.-%, jeweils bezogen auf das Gesamtgewicht der Komponenten (b) bis (g), eingesetzt.

Als Kettenverlängerungsmittel und/oder Vernetzungsmittel (d) werden Substanzen mit einem Molekulargewicht von kleiner 500 g/mol, bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (d) zum Einsatz.

Als Katalysatoren (e) zur Herstellung der hochelastischen Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Ferner sind bei der Herstellung von Polyurethanschaumstoffen Treibmittel (f) zugegen. Als Treibmittel (f) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid. In einer bevorzugten Ausführungsform wird als Treibmittel eine Mischung dieser Treibmittel, enthaltend Wasser, besonders bevorzugt ausschließlich Wasser, eingesetzt.

Der Gehalt an physikalischen Treibmitteln (f) liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%.

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe.

Bei der technischen Herstellung von Polyurethan-Schaumstoffen ist es üblich, die Verbindungen mit mindestens zwei aktiven Wasserstoffatomen b) und ein oder mehrere der Einsatzstoffe c) bis g), vor der Umsetzung mit dem Isocyanatprepolymer (a) zu einer sogenannten Polyolkomponente zu vereinigen.

Zur Herstellung der erfindungsgemäßen hochelastischen Polyurethanschaumstoffe werden die Polyisocyanatprepolymere mit den polymeren Verbindungen mit gegenüber Isocyanaten reaktiven Gruppen im Beisein der genannten Treibmittel, Katalysatoren und Hilfs- und/oder Zusatzstoffe (Polyolkomponente) zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b), (c) und gegebenenfalls (d) und (f) 0,7 bis 1,25:1, vorzugsweise 0,80 bis 1,15:1 beträgt. Ein Verhältnis von 1:1 entspricht dabei einem Isocyanatindex von 100.

Die Herstellung der erfindungsgemäßen Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Erfindungsgemäße Polyurethanweichschäume werden vorzugsweise als Polsterungen für Möbel und Matratzen, orthopädische Produkte, wie beispielsweise Kissen, für Polsterungen im Automobilbereich, wie Armlehnen, Kopfstützen und insbesondere Autositze verwendet und weisen eine hervorragende Verarbeitbarkeit auf. Insbesondere ist die Isocyanatkomponente gut mit Polyolkomponente mischbar, wodurch ein gleichmäßiger Schaumstoff mit guten mechanischen Eigenschaften erhalten wird. Weiter zeigt der erfindungsgemäße hochelastische Polyurethanschaumstoff hervorragende Eigenschaften nach 3 Zyklen der Feucht-Wärme Lagerung bei 120 °C über 5 Stunden (1 Zyklus) gemäß DIN EN ISO 2440. So ist beispielsweise der nach Lagerung und anschließender Trocknung gemessene Druckverformungsrest nach DIN EN ISO 1856 vorzugsweise weniger als 30 %, besonders bevorzugt weniger als 25 % kleiner als vor der Feucht-Wärme Lagerung.

Im Folgenden soll die Erfindung anhand von Beispielen verdeutlicht werden.

Zur Durchführung der Beispiele wurden folgende Einsatzstoffe verwendet:
Polyol 1:
   Glycerin gestartetes Polyoxypropylenpolyoxyethylen mit einem Polyoxyethylenanteil, bezogen auf den Gehalt an Alkylenoxid, von 14 Gew.-% und einer Hydroxylzahl von 28.
Polyol 2:
   Glycerin gestartetes Polyoxypropylenpolyoxyethylen mit einem Polyoxyethylenanteil, bezogen auf den Gehalt an Alkylenoxid, von 74 Gew.-% und einer Hydroxylzahl von 42.
Polyol 3:
   Glycerin gestartetes Polyoxypropylen mit einem Polyoxypropylenanteil, bezogen auf den Gehalt an Alkylenoxid, von 100 Gew.-% und einer Hydroxylzahl von 42.
Ricinusöl:
   Ricinusöl der Firma. ALBERDINGK BOL mit einer Dichte von 0,96 g/L, einer Viskosität von 1025 mPas bei 25 °C und einer OH-Zahl von 182 mg KOH/g
Isocyanat:
   Diphenylmethandiisocyanat mit einem Gehalt von 71 Gew.-% monomerem Diphenylmethandiisocyanat und 29 Gew.-% höherkernigen Homologen des Diphenylmethandiisocyanat, jeweils bezogen auf das Gesamtgewicht des Diphenylmethandiisocyanats, wobei das monomere Diphenylmethandiisocyanat 79 Gew.-% 4,4' Diphenylmethandiisocyanat und 21 Gew.-% 2,4'-Diphenylmethandiisocyanat aufweist.
Katalysator I:
   33 Gew.-%ige Lösung von Triethylendiamin in Ethylenglykol
Katalysator II:
   Polycat® 15, PU-Katalysator der Firma Air Products
Katalysator III:
   3-(Dimethylamino)propylamin
Katalysator IV:
   JEFFCAT® ZR-50: Pu-Katalysator der Fa. Huntsman

### Stabilisator

### Tegostab® B 8734 LF der Firma Goldschmidt

Zur Herstellung der Polyurethanweichschaumstoffe wurden Polyolkomponente und Polyisocyanatkomponente bei einem Isocyanatindex von 100 im Hochdruckverfahren vermischt und in eine Form gegeben. Dabei wurde die als Isocyanatkomponente ein Isocyanatprepolymer eingesetzt, das durch Vermischen der in Tabelle 1 unter "Isocyanatkomponente" angegebenen Substanzen und anschließender Erwärmung dieser Mischung auf 80 °C erhalten wurde. Die Polyolkomponente wurde durch Vermischen der in Tabelle 1 unter "Polyolkomponente" angegebenen Substanzen erhalten. Dabei sind die Mengenangaben in Gew.-%, bezogen auf das Gesamtgewicht der Polyol- bzw. der Isocyanatkomponente, angegeben.

**Tabelle 1**

| PolyolKomponente | Bsp. 1 | V 1 | Bsp. 2 | Bsp. 3 | V 2 | V 3 |
|---|---|---|---|---|---|---|
| Polyol 1 | 80,0 | 80,0 | 80,0 | 80,0 | 80,0 | 71,4 |
| Polyol 2 | | | | | | 2,9 |
| Polyol 3 | | | | | | 5,8 |
| Ricinusöl | 15,0 | 15,0 | 15,0 | 15,0 | 15,0 | 15,0 |
| Katalysator I | 0,2 | 0,2 | 0,2 | 0,2 | 0,2 | 0,2 |
| Katalysator II | 0,2 | 0,2 | 0,2 | 0,2 | 0,2 | 0,2 |
| Katalysator III | 0,2 | 0,2 | 0,2 | 0,2 | 0,2 | 0,2 |
| Katalysator IV | 0,2 | 0,2 | 0,2 | 0,2 | 0,2 | 0,2 |
| Diethanolamin | 0,4 | 0,4 | 0,4 | 0,4 | 0,4 | 0,4 |
| Stabilisator | 0,4 | 0,4 | 0,4 | 0,4 | 0,4 | 0,4 |
| Wasser | 3,4 | 3,4 | 3,4 | 3,4 | 3,4 | 3,4 |
| Isocyanat-Komponente | | | | | | |
| Isocyanat | 85,0 | 95,0 | 85,0 | 95,0 | 100,0 | 100 |
| Polyol 2 | 5,0 | 5,0 | 10,0 | - | - | - |
| Polyol 3 | 10,0 | - | 5,0 | 5,0 | - | - |
| NCO-Gehalt [Gew-%] | 32,0 | 32,4 | 32,0 | 32,4 | 32,5 | 32,5 |

Die mechanischen Eigenschaften der erhaltenen Polyurethanschaumstoffe sind in Tabelle 2 angegeben. Dabei wurde die Stauchhärte und die Hysterese nach DIN EN ISO 3386, der Druckverformungsrest nach DIN EN ISO 2439, die Zugfestigkeit und die Bruchdehnung nach DIN EN ISO 1798, die Luftdurchlässigkeit nach DIN EN ISO 7231, die Rückprallelastizität nach DIN EN ISO 8307, und die Weiterreißfestigkeit nach DIN ISO 34-1, B (b). bestimmt.

**Tabelle 2**

| | Bsp. 1 | V 1 | Bsp. 2 | Bsp. 3 | V 2 | V3 |
|---|---|---|---|---|---|---|
| Stauchhärte 25% [kPa] | 3,2 | 3,8 | 2,8 | 3 | 4,2 | 4 |
| Stauchhärte 40% [kPa] | 4,1 | 4,7 | 3,6 | 3,8 | 5,3 | 5,2 |
| Stauchhärte 65% [kPa] | 9,2 | 9,4 | 7,6 | 8,5 | 11,8 | 11,8 |
| Hysterese bei 70% [%] | 25,3 | 26,2 | 21,9 | 25 | 29,2 | 32,4 |
| Raumgewicht [kg/m³] | 47,5 | 47 | 48,1 | 46,3 | 47 | 48,8 |
| Druckverformungsrest [%] | 8,5 | 10,5 | 7,9 | 7,2 | 8,5 | 11,8 |
| Zugfestigkeit [kPa] | 102 | 121 | 87 | 81 | 104 | 100 |
| Bruchdehnung [%] | 92 | 96 | 85 | 89 | 81 | 78 |
| Luftdurchlässigkeit [dm³/s] | 0,9 | 0,792 | 0,888 | 1,043 | 0,639 | n.b. |
| Rückprallelastizität [%] | 52 | 51 | 54 | 52 | 47 | 44 |
| Weiterreißwiderstand [N/mm] | 0,41 | 0,44 | 0,33 | 0,35 | 0,4 | 0,38 |

Die mechanischen Eigenschaften nach 3 Zyklen Feucht-Wärmealterung gemäß DIN EN ISO 2440 sind in Tabelle 3 angegeben.

**Tabelle 3:**

| | Bsp. 1 | V 1 | Bsp. 2 | Bsp. 3 | V 2 | V 3 |
|---|---|---|---|---|---|---|
| Stauchhärte 40% [kPa] | 2,7 | 3,3 | 1,9 | 2,5 | 3,6 | 3,8 |
| | | | 12,1 | 16,3 | | 30,6 |
| Druckverformungsrest [%] | 23 | 26 | (17,1) | (19,3) | 23,2 | |
| Zugfestigkeit [kPa] | 72 | 75 | 55 | 59 | 72 | 70 |
| Bruchdehnung [%] | 122 | 112 | 110 | 95 | 86 | 85 |
| StH-Änderung [%] | 34,1 | 29,8 | 47,2 | 34,2 | 32,1 | 26 |

Die Beispiele zeigen deutlich, dass erfindungsgemäße hochelastische Polyurethanweichschaumstoffe sehr gute mechanische Eigenschaften, insbesondere eine geringe Stauchhärte, einen geringen Druckverformungsrest und eine hohe Rückprallelastizität, insbesondere nach Feucht-Wärmealterung aufweisen.

## Patentansprüche

1. Verfahren zur Herstellung von hochelastischen Polyurethanweichschaumstoffen mit einer Dichte von kleiner als 100 g/l und einer Rückprallelastizität nach DIN EN 8307 von größer als 40%, bei dem man
a) Isocyanatprepolymer
b) polymere Verbindungen mit gegenüber Isocyanaten reaktiven Gruppen
c) Ricinusöl
d) gegebenenfalls Kettenverlängerungs- und/oder Vernetzungsmittel,
e) Katalysatoren
f) Treibmittel sowie gegebenenfalls
g) Zusatzstoffe,
zu einer Reaktionsmischung vermischt und zum Polyurethanweichschaumstoff umsetzt, wobei mehr als 5 Gew.-% Ricinusöl (c), bezogen auf das Gesamtgewicht der Komponenten (b) bis (g) eingesetzt werden und
das Isocyanatprepolymer (a) erhalten wird durch Vermischen von Diphenylmethandiisocyanat (a1) und Polyol 1 (a2) sowie gegebenenfalls weiteren Polyolen, Kettenverlängerem und/oder Vernetzungsmitteln, wobei als Polyol 1 (a2) ein Polyalkylenoxidpolyol mit einer Hydroxylzahl von 30 bis 60, einer mittleren Funktionalität von 2,3 bis 3,2 und einem Propylenoxidanteil, bezogen auf den Gehalt an Alkylenoxid, von 90 bis 100 Gew.-% eingesetzt wird.

2. Verfahren nach Anspruch 1, **dadurch gekennzeichnet, dass** das Diphenylmethandiisocyanat (a1) einen Gehalt an 50 bis 80 Gew.-% monomerem Diphenylmethandiisocyanat und 20 bis 50 Gew.-% höherkernigen Homologen des Diphenylmethandiisocyanat, jeweils bezogen auf das Gesamtgewicht des Diphenylmethandiisocyanats (a1), aufweist.

3. Verfahren nach Anspruch 2, **dadurch gekennzeichnet, dass** das monomere Diphenylmethandiisocyanat einen Anteil von 70 bis 85 Gew.-%, des 4,4' Isomeren des Dipenylmethandiisocyanats und 15 bis 30 Gew.-% des 2,4'-Isomeren des Diphenylmethandiisocyanats, jeweils bezogen auf das Gesamtgewicht des monomeren Diphenylmethandiisocyanats, aufweist.

4. Verfahren nach einem der Ansprüche 1 bis 3, **dadurch gekennzeichnet, dass** das Isocyanatprepolymer einen Isocyanatgehalt von 28 bis 33 Gew.-% aufweist.

5. Verfahren nach einem der Ansprüche 1 bis 4, **dadurch gekennzeichnet, dass** das Isocyanatprepolymer (a) erhalten wird durch Vermischen von 75 bis 99 Gew.-% Diphenylmethandiisocyanat (a1), 1 bis 10 Gew.-% Polyol 1 (a2) und 0 bis 15 Gew.-% Polyol 2, wobei als Polyol 2 ein Polyalkylenoxidpolyol mit einer Hydroxylzahl von 30 bis 60, einer mittleren Funktionalität von 2,3 bis 3,2 und einem Ethylenoxidanteil, bezogen auf den Gehalt an Alkylenoxid, von 70 bis 90 Gew.-% eingesetzt wird.

6. Verfahren nach Anspruch 5, **dadurch gekennzeichnet, dass** der Anteil an Polyol 2 am Isocyanatprepolymer (a) 2 bis 15 Gew.-% beträgt.

7. Verfahren nach einem der Ansprüche 1 bis 6, **dadurch gekennzeichnet, dass** der Anteil von Ricinusöl (c) am Gesamtgewicht der Komponenten (b) bis (g) größer als 10 Gew.-% ist.

8. Verfahren nach einem der Ansprüche 1 bis 7, **dadurch gekennzeichnet, dass** der Isocyanatindex 70 bis 125 beträgt.

9. Verfahren nach einem der Ansprüche 1 bis 8, **dadurch gekennzeichnet, dass** die Rückprallelastizität nach DIN EN 8307 größer als 45% ist.

10. Verfahren nach einem der Ansprüche 1 bis 9, **dadurch gekennzeichnet, dass** als polymere Verbindung (b) zu mehr als 70 Gew.-%, bezogen auf die polymere Verbindung (b), Polyetheralkohole mit einer Funktionalität von 2 bis 4 und einem mittleren Equivalentmolekulargewicht von 400 bis 3000 eingesetzt werden, wobei die Polyetheralkohole erhältlich sind durch Reaktion von Ethylen und/oder Propylen als Alkylenoxide und Startermolekülen und der Gehalt an Ethylenoxid, bezogen auf das Gesamtgewicht an Ethylenoxid und Propylenoxid, 40 bis 5 Gew.-% beträgt.

11. Hochelastischer Polyurethanschaumstoff, erhältlich nach einem Verfahren gemäß einem der Ansprüche 1 bis 10.

12. Verwendung von Polyurethanschaumstoffen nach Anspruch 11 zur Herstellung von Autositzen.

## Claims

1. A process for producing high resilience flexible polyurethane foams having a density of less than 100 g/l and a DIN EN 8307 resilience of greater than 40% which comprises
a) isocyanate prepolymer,
b) polymeric compounds having isocyanate-reactive groups,
c) castor oil,
d) optionally chain-extending and/or crosslinking agents,
e) catalysts,
f) blowing agents, and also optionally
g) additives,
being mixed to form a reaction mixture and reacted to form the flexible polyurethane foam,
wherein more than 5 wt% of castor oil (c) is used, based on the total weight of components (b) to (g), and
the isocyanate prepolymer (a) is obtained by mixing diphenylmethane diisocyanate (a1) and polyol 1 (a2) and also optionally further polyols, chain extenders and/or crosslinkers, wherein the polyol 1 (a2) comprises a polyalkylene oxide polyol having a hydroxyl number of 30 to 60, an average functionality of 2.3 to 3.2 and a propylene oxide fraction, based on the alkylene oxide content, of 90 to 100 wt%.

2. The process according to claim 1 wherein the diphenylmethane diisocyanate (a1) comprises from 50 to 80 wt% of monomeric diphenylmethane diisocyanate and from 20 to 50 wt% of higher-nuclear homologs of diphenylmethane diisocyanate, all based on the total weight of diphenylmethane diisocyanate (a1).

3. The process according to claim 2 wherein the monomeric diphenylmethane diisocyanate comprises from 70 to 85 wt% of the 4,4'-isomer of diphenylmethane diisocyanate and from 15 to 30 wt% of 2,4'-isomer of diphenylmethane diisocyanate, all based on the total weight of monomeric diphenylmethane diisocyanate.

4. The process according to any of claims 1 to 3 wherein the isocyanate prepolymer has an isocyanate content of 28 to 33 wt%.

5. The process according to any of claims 1 to 4 wherein the isocyanate prepolymer (a) is obtained by mixing 75 to 99 wt% of diphenylmethane diisocyanate (a1), 1 to 10 wt% of polyol 1 (a2) and 0 to 15 wt% of polyol 2, wherein polyol 2 comprises a polyalkylene oxide polyol having a hydroxyl number of 30 to 60, an average functionality of 2.3 to 3.2 and an ethylene oxide fraction, based on the alkylene oxide content, of 70 to 90 wt%.

6. The process according to claim 5 wherein the portion of isocyanate prepolymer (a) that is attributable to polyol 2 is in the range from 2 to 15 wt%.

7. The process according to any of claims 1 to 6 wherein the proportion of the total weight of components (b) to (g) that is attributable to castor oil (c) is greater than 10 wt%.

8. The process according to any of claims 1 to 7 wherein the isocyanate index is in the range from 70 to 125.

9. The process according to any of claims 1 to 8 wherein the DIN EN 8307 resilience is greater than 45%.

10. The process according to any of claims 1 to 9 wherein polymeric compound (b) comprises more than 70 wt%, based on said polymeric compound (b), of polyether alcohols having a functionality of 2 to 4 and an average equivalent molecular weight of 400 to 3000, said polyether alcohols being obtainable by reaction of ethylene and/or propylene as alkylene oxides and starter molecules and the ethylene oxide content, based on the total weight of ethylene oxide and propylene oxide, being in the range from 40 to 5 wt%.

11. A high resilience polyurethane foam obtainable by a process according to any of claims 1 to 10.

12. The use of polyurethane foams according to claim 11 in the manufacture of auto seats.

## Revendications

1. Procédé de fabrication de mousses souples de polyuréthane hautement élastiques présentant une densité inférieure à 100 g/l et une élasticité de retour selon DIN EN 8307 supérieure à 40 %, selon lequel
a) un prépolymère d'isocyanate,
b) des composés polymères contenant des groupes réactifs avec les isocyanates,
c) de l'huile de ricin,
d) éventuellement des agents d'allongement de chaînes et/ou de réticulation,
e) des catalyseurs,
f) des agents gonflants, et éventuellement
g) des additifs
sont mélangés en un mélange réactionnel et transformés en la mousse souple de polyuréthane, plus de 5 % en poids d'huile de ricin (c) étant utilisé, par rapport au poids total des composants (b) à (g), et
le prépolymère d'isocyanate (a) étant obtenu par mélange de diisocyanate de diphénylméthane (a1) et d'un polyol 1 (a2), ainsi qu'éventuellement de polyols supplémentaires, d'allongeurs de chaînes et/ou d'agents de réticulation, un oxyde de polyalkylène-polyol d'un indice hydroxyle de 30 à 60, d'une fonctionnalité moyenne de 2,3 à 3,2 et d'une proportion d'oxyde de propylène, par rapport à la teneur en oxyde d'alkylène, de 90 à 100 % en poids étant utilisé en tant que polyol 1 (a2).

2. Procédé selon la revendication 1, **caractérisé en ce que** le diisocyanate de diphénylméthane (a1) présente une teneur de 50 à 80 % en poids en diisocyanate de diphénylméthane monomère et de 20 à 50 % en poids en homologues de nombre de noyaux supérieur du diisocyanate de diphénylméthane, à chaque fois par rapport au poids total du diisocyanate de diphénylméthane (a1).

3. Procédé selon la revendication 2, **caractérisé en ce que** le diisocyanate de diphénylméthane monomère présente une proportion de 70 à 85 % en poids de l'isomère 4,4' du diisocyanate de diphénylméthane et de 15 à 30 % en poids de l'isomère 2,4' du diisocyanate de diphénylméthane, à chaque fois par rapport au poids total du diisocyanate de diphénylméthane monomère.

4. Procédé selon l'une quelconque des revendications 1 à 3, **caractérisé en ce que** le prépolymère d'isocyanate présente une teneur en isocyanate de 28 à 33 % en poids.

5. Procédé selon l'une quelconque des revendications 1 à 4, **caractérisé en ce que** le prépolymère d'isocyanate (a) est obtenu par mélange de 75 à 99 % en poids de diisocyanate de diphénylméthane (a1), 1 à 10 % en poids d'un polyol 1 (a2) et 0 à 15 % en poids d'un polyol 2, un oxyde de polyalkylène-polyol d'un indice hydroxyde de 30 à 60, d'une fonctionnalité moyenne de 2,3 à 3,2 et d'une proportion d'oxyde d'éthylène, par rapport à la teneur en oxyde d'alkylène, de 70 à 90 % en poids étant utilisé en tant que polyol 2.

6. Procédé selon la revendication 5, **caractérisé en ce que** la proportion de polyol 2 dans le prépolymère d'isocyanate (a) est de 2 à 15 % en poids.

7. Procédé selon l'une quelconque des revendications 1 à 6, **caractérisé en ce que** la proportion d'huile de ricin (c) par rapport au poids total des composants (b) à (g) est supérieure à 10 % en poids.

8. Procédé selon l'une quelconque des revendications 1 à 7, **caractérisé en ce que** l'indice d'isocyanate est de 70 à 125.

9. Procédé selon l'une quelconque des revendications 1 à 8, **caractérisé en ce que** l'élasticité de retour selon DIN EN 8307 est supérieure à 45 %.

10. Procédé selon l'une quelconque des revendications 1 à 9, **caractérisé en ce que** plus de 70 % en poids, par rapport au composé polymère (b), de polyéther-alcools d'une fonctionnalité de 2 à 4 et d'un poids moléculaire équivalent moyen de 400 à 3 000, sont utilisés en tant que composé polymère (b), les polyéther-alcools pouvant être obtenus par mise en réaction d'éthylène et/ou de propylène en tant qu'oxydes d'alkylène et de molécules de départ, et la teneur en oxyde d'éthylène, par rapport au poids total d'oxyde d'éthylène et d'oxyde de propylène, étant de 40 à 5 % en poids.

11. Mousse de polyuréthane hautement élastique, pouvant être obtenue par un procédé selon l'une quelconque des revendications 1 à 10.

12. Utilisation de mousses de polyuréthane selon la revendication 11 pour la fabrication de sièges automobiles.
